# EUROPÄISCHE PATENTSCHRIFT

(11) **EP 0 545 887 B1**
(45) Veröffentlichungstag und Bekanntmachung des Hinweises auf die Patenterteilung: **30.06.1999**
(21) Anmeldenummer: 92890250.1
(22) Anmeldetag: 26.11.1992
(51) Int. Cl.: G01J 1/42, A61N 5/00

(54) **Ein transportables Messgerät zur Erfassung der UV-Strahlendosis als Schutz vor gesundheitlichen Schädigungen der Haut**
Transportable measuring device for recording the UV-radiation dose as a protection against injury to the health of the skin
Dispositif de mesure transportable pour enregistrer la dose de rayonnement ultra-violet conçu pour protéger la peau contre des dommages

(30) Priorität: 29.11.1991 AT 237991
(43) Veröffentlichungstag der Anmeldung: 09.06.1993
(73) Patentinhaber: Steiner, Wilhelm, A-1110 Wien (AT); Hauser, Hans, Dr. Dipl.-Ing., A-1160 Wien (AT); Lode, Heinz, A-1030 Wien (AT)
(72) Erfinder: Steiner, Wilhelm, A-1110 Wien (AT); Hauser, Hans, Dr. Dipl.-Ing., A-1160 Wien (AT); Lode, Heinz, A-1030 Wien (AT)
(74) Vertreter: Weinzinger, Arnulf, Dipl.-Ing.

(56) Entgegenhaltungen:
- DE-A- 3 921 951
- GB-A- 2 236 182
- US-A- 4 428 050
- US-A- 5 008 548

## Beschreibung

Die Erfindung betrifft ein Gerät gemäß dem einleitenden Teil des Anspruches 1.

Aus der GB 22 36 182 A ist ein Gerät zur Erfassung von Ultraviolett-Strahlung bekannt, das einen Sensor aufweist, dessen Ausgang in den Eingang eines Impulsgebers gelegt ist, der abhängig von der empfangenen Strahlungsdosis Impulse an einen Mikroprozessor abgibt und so die Erfassung der jeweiligen Strahlungsdosis bewirkt. Der Mikroprozessor steuert eine LCD-Anzeigeeinrichtung sowie eine akustische Alarmeinrichtung an, und es sind ihm Eingabetasten zugeordnet, mit denen Parameter betreffend den Hauttyp des Benützers, den Sonnenschutzfaktor eines Sonnenschutzmittels sowie auch Daten betreffend das Ausmaß einer früheren Bräunung des Benützers eingegeben werden können. Der Mikroprozessor berechnet aufgrund der eingegebenen Parameter eine ungefähre maximal erlaubte UV-Strahlungsdosis sowie auf Basis hiervon eine entsprechende Bestrahlungsdauer.

Im Prinzip ähnliche Geräte sind aus WO 86/3319A, DE 40 12 984 A, DE 39 21 951 A, US 5 008 548 A, US 4 962 910 A, US 4 428 050 A und US 4 372 680 A bekannt.

Mit den bekannten Geräten wird allgemein die auf den Körper eines Benützers einwirkende UV-Strahlung erfaßt, ohne daß es möglich wäre, daß die Erfassung von Strahlung, die auf bestimmte Körperpartien auftrifft, selektiv ausgewählt werden kann, und ohne spezifische Berücksichtigung der Strahlungsbelastung bei einer gehenden oder laufenden Person. Anders als in der Radiologie bzw. beim Umgang mit radioaktiven Substanzen wäre es aber in Bezug auf Sonnenbestrahlung von Bedeutung, nicht die insgesamt auf einen Körper schlechthin einwirkende Strahlenmenge zu berücksichtigen und somit die einwirkende Gesamtstrahlenbelastung zu messen, sondern die jeweils auf definierte Körperpartien einwirkende UV-Strahlenbelastung zu erfassen und ihre Auswirkung auf die exponierten Hautregionen spezifisch zu messen und auszuwerten. Aufgabe der Erfindung ist es daher, eine spezifische Erfassung der UV-Strahlenbelastung abhängig von der Position des Benützers bewußt zu ermöglichen. Die Erfindung basiert dabei auch auf der Überlegung, daß in Anbetracht der zunehmenden Strahlenbelastung (UV-B) bzw. der in letzter Zeit stark fortschreitenden Auflösung der schützenden Ozonschicht der Erdathmosphäre (UV-C-Strahlung) eine Überwachung der UV-Strahlendosen im Hinblick auf die Vermeidung von gesundheitlichen Schäden, wie beispielsweise Sonnenbrand, DNA-Schäden, vorzeitige Hautalterung, Immunsuppression, Lichtdermatosen, Verbrennungen unbestimmten Grades, Hautkrebs usw. beim Sonnenbaden oder auch bei einem längeren Aufenthalt im Freien immer wichtiger wird.

Zur Lösung der Aufgabe wie vorstehend angeführt sieht die Erfindung ein Gerät mit den Merkmalen gemäß Anspruch 1 vor.

Besonders vorteilhafte Ausführungsformen und Weiterbildungen sind in den Unteransprüchen definiert.

Beim vorliegenden Gerät ist vor allem von Vorteil, daß selektiv die gesonderte Berechnung der Bestrahlungsbelastung für die zwei unterschiedlichen Bestrahlungspositionen (Bauchlage, Rückenlage) ermöglicht wird. Weiters wird auch bevorzugt die Möglichkeit vorgesehen, eine Bestrahlung während Bewegungen zu berücksichtigen, und zwar einfach durch Hinzurechnung der während der Bewegung empfangenen Bestrahlungsdosis zu jeweils 50 % zu den Bestrahlungsmengen für die Positionen Bauchlage bzw. Rückenlage. Diese selektiven Erfassungen können bei Geräten in einseitiger Ausführung mit Hilfe entsprechender Eingaben über die Eingabeelemente veranlaßt werden. Eine besonders einfache Handhabung ergibt sich bei Geräten mit beidseitig angebrachten Meßzellen und Bedienungselementen, bei welchen die getrennte Berechnung der Strahlenbelastung in Bauch- bzw. Rückenlage bei einem Positionswechsel einfach durch Wenden des Gerätes veranlaßt wird. Im Fall daß externe Meßzellen angeschlossen sind, kann ebenfalls eine automatische Umschaltung bei der Erfassung der jeweiligen Strahlenbelastung in der Bauchlage oder Rückenlage erfolgen, wobei diese Meßzellen je nach Ausführung einseitig, doppelseitig bzw. mehrseitig erregbar sind und für die Messung der Strahlungsintensität während der Bewegung in unterschiedlichen Formen direkt am Körper getragen werden können.

Das vorliegende Gerät kann aufgrund seiner geringen Größe problemlos am Körper getragen bzw. transportiert werden, und es kann der Messung und Auswertung von UV-A (315 nm bis 400 nm)-, UV-B (280 nm bis 315 nm)- und UV-C (100 nm bis 280 nm)-Strahlung dienen. Auch kann mit diesem Gerät ein akustisches und/oder optisches Warnsignal bei Überschreiten der anhand verschiedener Parameter voreinstellbaren Dosis abgegeben werden. Weitere Vorteile können kurz wie folgt angeführt werden:
- Empfindlichkeitsbereiche von UV-A-, UV-B- und UV-C-Strahlung mit entsprechender Bewertung der einzelnen Strahlenarten durch Messung der Bestrahlungsdosis über die gesamte Bandbreite des jeweiligen UV-Bereiches bzw. durch Ausfilterung einzelner Teilbereiche bzw. einzelner Wellenlängen innerhalb der drei UV-Bereiche (Verwendung getrennter Filter bzw. Sensoren).
- Geringes Bauvolumen: Ausführung als Armbanduhr, Scheckkartenrechner, Schmuckstück, Haarband etc. oder beispielsweise in Taschenrechnerform mit ein- bzw. doppelseitiger Ausführung, wobei sich bei letzterer Sensoren und Eingabetasten auf beiden Seiten des Gerätes befinden; eventuell auch mit einer Anschlußmöglichkeit für externe - ein- oder mehrseitig verwendbare - Sensoren für die drei UV-Bereiche in unterschiedlichster Ausführung, wie Clips, als Bestandteil eines Stirnbandes, Gürtels, einer Schirmmütze etc.
- Selbständige Erhöhung der gesamten Tages-Bestrahlungsmenge in Abhängigkeit von bereits konsumierten Bestrahlungsmengen während einer Bestrahlungsperiode (nach entsprechender Eingabe).
- Vereinfachung und Standardisierung des Kalibriervorganges durch Eingabe des persönlichen Hauttyps (Pigmentierungstyps) sowie Möglichkeit einer Nachjustierung und Abspeicherung für zukünftige Bestrahlungsperioden.
- Festlegung eines Meßzieles, das bei der Erythemschwelle (das ist jene Strahlendosis, bei der erste Anzeichen einer entzündlichen Hautrötung erscheinen) bzw. aus medizinischen Gründen unterhalb der Erythemschwelle liegen soll, um gesundheitliche Nachteile, wie DNA-Schäden und vorzeitige Hautalterung zu vermeiden (laut bisherigen Untersuchungen liegt der Grenzwert, unter dem keine gesundheitlichen Nachteile zu erwarten sind, bei 66 % der Erythemschwelle).
- Berücksichtigung eines möglichen Wechsels des Sonnenschutzmittels innerhalb einer Bestrahlungseinheit durch entsprechende Eingaben.
- Ausweisung der zu erwartenden Restverweildauer bzw. der Prozentangabe der bereits konsumierten Bestrahlungsmenge sowie eines entsprechenden Lagesymbols.

Die in den beiden, beim Sonnenbad zumeist eingenommenen Hauptpositionen Bauch- und Rückenlage (wobei ein oftmaliger, unregelmäßiger und bei unterschiedlichen Bestrahlungsbedingungen vorgenommener Wechsel zwischen diesen Lagen häufig ist) konsumierte UV-Bestrahlung wird solcherart nach entsprechender Eingabe getrennt berechnet und über ein Display ausgewiesen. In einer besonders bevorzugten Gerätausführung ist, um auch die Möglichkeit einer kurzzeitigen Sonnenbestrahlung in Bewegung zu berücksichtigen, eine jeweils 50%ige Hinzurechnung der während dieser Zeitphase auf den Körper einwirkenden UV-Strahlenmenge zu den beiden definierten Hauptlage Bauch- und Rückenlage vorgesehen. Diese Gerätausführung ist beispielsweise mit einseitig angebrachter Eingabetastatur und Sensorfeld sowie Display versehen, wobei die jeweiligen Lagewechsel zwischen Bauchlage, Rückenlage und Bewegung mittels entsprechenden Eingaben nach jedem Positionswechsel zur getrennten Aufsummierung der jeweils dieser Körperlage zuzuordnenden Bestrahlungsmenge erreicht wird. Bedienungsfreundlicher kann eine Gerätausführung derart konstruiert werden, daß beidseitig installierte Sensoren, Bedienungselemente und Displays eine Eingabe nach dem erfolgten Positionswechsel erübrigen, da das Gerät bei jedem Wechsel zwischen Bauch- und Rückenlage gewendet und somit die getrennte Berechnung der auf die beiden unterschiedlichen Körperpartien einwirkenden UV-Strahlenmengen durch Abdecken bzw. Ausrichten des entsprechenden Sensorfeldes zur Strahlungsquelle erreicht wird. Die beiden Seiten des Wendegerätes sind mit einfach zuzuordnenden Symbolaufprägungen zu kennzeichnen, um eine Verwechslung bzw. einen Irrtum auszuschließen.

Auch in letztgenannter Ausführung ist jedoch bei Verlassen der Horizontallage durch eine entsprechende Eingabe eine 50%ige Addition zu den beiden Hauptlagen herbeizuführen. In diesem Fall wird nur eines der beiden Sensorfelder aktiviert, welches die Bestrahlung in Bewegung dann singulär mißt und dem Rechner zuleitet.

Besonders vorteilhaft ist auch die Anschlußmöglichkeit von zumindest zwei, durch geeignete Kennzeichnung der Vorder- und Rückseite des Körpers eindeutig zuzuordnenden, externen Sensoren an beiden beschriebenen Gerätetypen. Durch diese, an Stirnbändern, Clips und dergl. befestigten externen Sensoren, die über Anschlußkabel und eine Steckverbindung mit dem Basisgerät in Kontakt stehen, wird die während der Bewegung auf den Körper auftretende UV-Strahlenmenge in exakt dem Verhältnis und mit genau der erfaßten Intensität dem Gerät zugeleitet, wie sie tatsächlich auf die Haut einwirkt.

Nach Verlassen der Horizontallage kann demnach durch Einstecken der Steckverbindung der beiden oder mehreren externen Sensoren die Messung der Strahlenintensität durch Deaktivierung der Sensoren des Basisgerätes und Aktivierung der externen Sensoren eine auf die jeweilige Strahlungsexponierung des bewegten Körpers Rücksicht nehmende, getrennte Berechnung zwischen den beiden Hauptlagen (Bauch- und Rückenlage) vorgenommen werden.

Durch die beschriebene Vorgangsweise wird auch auf die Problematik des Einfallswinkels der Strahlung während der Bestrahlung in Bewegung Rücksicht genommen, da nunmehr ebenso wie bei Bestrahlung in horizontaler Lage, während der das Gerät neben dem Körper plaziert wird, nun auch bei Bewegung der Winkel der auf die Sensoren auftreffenden UV-Strahlung dem jener Körperebenen entspricht, die bei Sonnenbestrahlung besonders berücksichtigungswert erscheinen. Durch den Einsatz externer Sensoren ist somit eine exakte Zuordnung der Strahlenbelastung während der Bewegung zur Bauch- bzw. Rückenlage gewährleistet.

Vorteilhaft ist auch die über die Eingabeelemente (Bedienungstastatur) vorzunehmende Eingabe der Anzahl der bereits konsumierten Bestrahlungstage. Entsprechend dieser Eingabe erfolgt eine Berechnung der Zunahme der gefahrlosen Verweildauer unter UV-Strahlenbelastung, resultierend aus der Tatsache, daß sich eine Erhöhung der Eigenschutzfähigkeit der menschlichen Haut durch eine Verlängerung der unbedenklichen Bestrahlungsdauer in Abhängigkeit von bereits konsumierten Bestrahlungsmengen bemerkbar macht. Eine im Gerät vorgesehene Speicherfunktion summiert die während der gegenwärtigen Bestrahlungsperiode bereits auf die Haut eingewirkte UV-B-Strahlenmenge und berechnet aus dem so erhaltenen Wert, der gesteigerten Eigenschutzkapazität der Haut entsprechend, die Zunahme der Verweildauer unter Sonneneinwirkung und weist sie über das Display aus. Die Erhöhung der nicht gesundheitsschädlichen Bestrahlungsmenge wird mit 30 % pro Bestrahlungstag angenommen, muß jedoch, den Ansprüchen des Gerätes Folge leistend, dermatologisch verifiziert werden.

Ein weiterer Vorteil liegt wie erwähnt in der Kalibrierbarkeit des Gerätes. Während bei bekannten Geräten die der Berechnung der Bräunungsdauer zugrundeliegenden Parameter an Hand von Tabellen ungefähr eingeschätzt werden müssen bzw. allein die Eingabe des Hauttyps als Basis der Auswertung dient, ist beim vorliegenden Gerät eine Kalibrierung mittels eines Diagnosegerätes zur Bestimmung der Empfindlichkeit der menschlichen Haut bezüglich ultravioletter Strahlung ins Auge gefaßt. Dieser Apparat beinhaltet eine UV-B-Strahlenquelle, die, in ihrer Emissionsintensität durch eine Anzahl von nebeneinander liegenden UV-B-Filtern abgestuft erythemauslösend, eine festgelegte Zeit lang auf die Haut der zu testenden Person einwirkt, so daß an Hand der nach ca. vier Stunden auftretenden Hautreaktion von einer befugten und unterwiesenen Person (Arzt, Apotheker, Drogist u.a.) die Haut bewertet und entsprechend ihrer Empfindlichkeit gegenüber UV-B-Bestrahlung eingestuft werden kann. Durch Eingabe des Hauttyps und durch Eingabe der prozentuellen Abweichung von diesem normierten Hauttyp wird anschließend die Kalibrierung des Gerätes vorgenommen. Dieser Basiswert wird vom Meßgerät gespeichert und dient als Grundlage für die Berechnung während der Bestrahlungsperiode. Sollte sich der Bräunungsgrad der Haut vor Beginn nachfolgender Bestrahlungsperioden wesentlich von dem bei der zuletzt vorgenommenen Kalibrierung unterscheiden, ist eine solche erneut anzuraten.

Ein weiteres Unterscheidungsmerkmal zu anderen UV-Dosimetern ist das gegenüber diesen weniger hoch angesetzte Meßziel.

Wissenschaftlichen Arbeiten zufolge ist bereits beim Erreichen der Erythemschwelle, dem ersten Anzeichen einer Hautrötung, welche allerdings im Regelfall erst nach einer Zeitspanne von vier Stunden erkennbar wird, so daß durch diese Wirkungsverzögerung keine Korrektur des Bräunungsverhaltens mehr möglich ist, eine gesundheitliche Schädigung der Haut unausweichlich und als gegeben anzusehen. Diese durch UV-Bestrahlung hervorgerufenen Veränderungen der Haut betreffen hauptsächlich die DNA der Zellkerne der Hautzellen, was, sollte durch das Ausmaß der Schädigung der Reparaturmechanismus der DNA überfordert sein, zu einer irreparablen Schädigung der DNA-Kette führt ein Umstand, der sich in Form eines Hautkarzinoms manifestieren kann. Daneben sind die weniger dramatischen Begleiterscheinungen einer zu intensiven Sonnenbestrahlung, wie Sonnenbrand, welcher eine Verbrennung unbestimmten Grades darstellt, vorzeitige Hautalterung, Immunsuppression, Lichtdermatose etc. zu nennen.

Im Gegensatz zu den bekannten Geräten ist beim vorliegenden Gerät ein Meßziel von 66 % (also zwei Drittel) des Erythemschwellenwertes vorgesehen. Dieser, von der Dermatologie als von seinen gesundheitsschädlichen Auswirkungen als unbedenklich erachtete Wert kann jedoch niemals vom Sonnenbadenden durch Selbstbeobachtung erkannt und berücksichtigt werden, sondern muß ihm durch ein Meßgerät angezeigt werden.

Ein weiterer Vorteil des vorliegenden Gerätes ist die insbesondere vorgesehene Erweiterung des Meßumfanges durch Einbeziehung einer Intensitätsmessung im Wellenlängenbereich der UV-C-Strahlung. Ein zusätzlicher UV-C-Sensor im Sensorfeld der einseitigen oder beidseitigen Geräte-Ausführung bzw. bei den externen Sensoren ist während des Betriebes des Gerätes permanent in Funktion und löst, sollten von ihm kritische UV-C-Strahlenwerte gemessen werden, eine optisch und akustisch wahrzunehmende Alarmfunktion im Gerät aus. In diesem Fall ist auf Grund der Hautkrebs auslösenden Strahleneinwirkung vor einem ungeschützten Aufenthalt im Freien dringend abzuraten.

Die Maßnahme der UV-C-Strahlenwarnung erscheint in Zusammenhang mit der fortschreitenden Zerstörung der UV-C-adsorbierenden Ozonschicht der Erdatmosphäre besonders bedeutsam.

Die Erfindung wird nachfolgend anhand eines bevorzugten Ausführungsbeispiels, auf das sie jedoch nicht beschränkt sein soll, noch weiter erläutert. Es zeigen:
Fig.1 den prinzipiellen schaltungsmäßigen Aufbau eines erfindungsgemäßen Gerätes; und
Fig.2 das Gerät mit den Bedienungs- und Anzeigeelementen in Grund-, Auf- und Seitenriß.

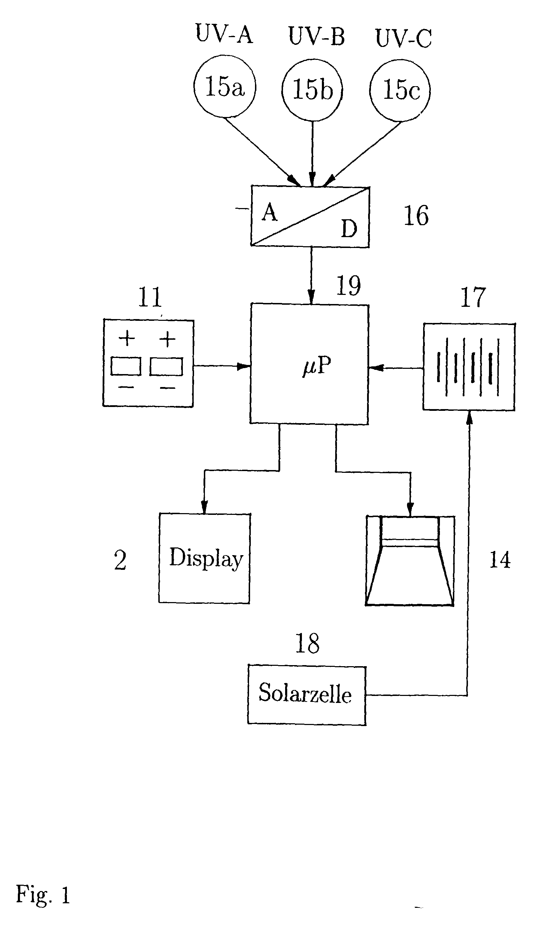

In Fig.1 bezeichnen 15a, 15b und 15c UV-empfindliche Meßzellen, beispielsweise Solarzellen, die durch entsprechende Filter, wie Quarzgläser, Bleigläser u.a. (eventuell auch durch Kombination) die gewünschten Wellenlängen der Sonnenbestrahlung direkt erfassen, oder auch andere Halbleitersensoren, die das Licht von Sekundäremissionen messen (dabei werden die Atomhüllen einer Substanz durch Einwirken von UV-Strahlung einer bestimmten Wellenlänge zur Aussendung sichtbaren Lichtes angeregt, welches vergleichsweise einfach registriert werden kann). Die Spannungssignale der Meßzellen 15a, 15b, 15c werden einem Single-Chip-Mikroprozessor 19 zugeführt, in dem ein Berechnungs- und Steuerprogramm unveränderlich eingebrannt ist (EPROM).

Über eine Eingabeeinrichtung 11 können verschiedene Parameter gesetzt werden, die im Folgenden noch genauer zu erörtern sind, wonach das Programm zur Berechnung der Strahlenbelastung bzw. der Verweildauer die UV-Beiträge aufsummiert und schließlich bei Überschreiten des jeweiligen Grenzwertes ein Warnsignal über eine Warneinrichtung 14 ausgibt. Sämtliche Betriebszustände, Dosen und Zeiten können an einem Display bzw. an einer Anzeigeeinrichtung 2 abgelesen werden. Ein kleiner Knopfzellenakkumulator 17, welcher mittels einer Solarzelle 18 oder extern aufgeladen wird, versorgt das Gerät mit elektrischer Energie.

Die Zeitmessung erfolgt vorteilhafterweise über die Zählung der Zyklen der Taktfrequenz eines Prozessors, welche im Rechner 19 erzeugt wird, während die Spannungsmessung mittels eines einfachen Analog/Digital-Wandlers 16 erfolgen kann, dessen Eingang zyklisch an die UV-Meßzellen 15a, 15b, 15c geschaltet wird. Verwendet man als Sensor beispielsweise einen lichtempfindlichen Widerstand, einen Fototransistor oder ein anderes Halbleiterbauelement, dann wird nach Umwandlung der entsprechenden veränderlichen Größe in ein elektrisches Spannungssignal analog zum obigen Fall verfahren.

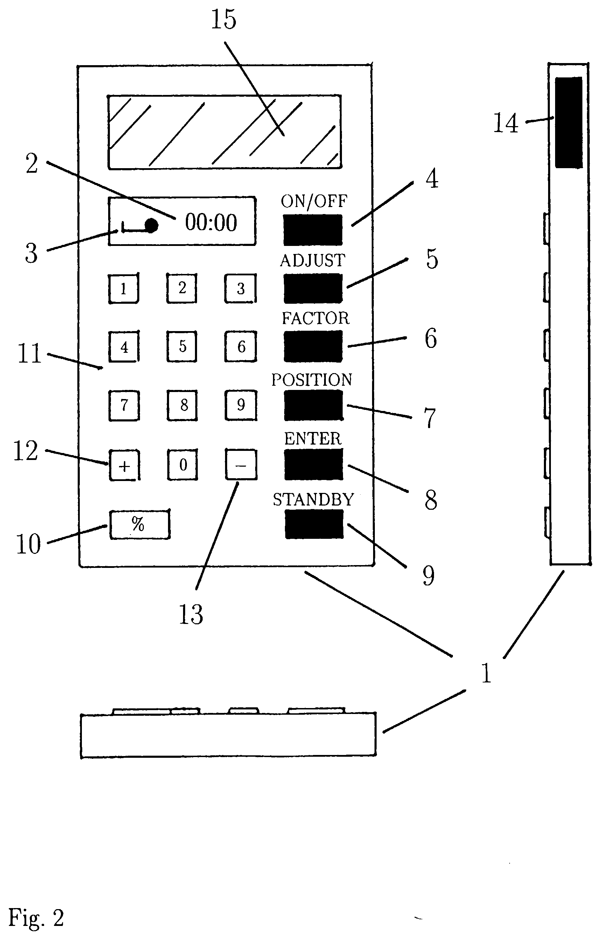

Das in Fig.2 gezeigte Gerät 1, welches der einfachsten Ausführungsform mit einseitiger Anordnung von Bedienungs- und Anzeigeelementen entspricht, enthält an seiner Vorderseite die Anzeigeeinrichtung in Form des Displays 2, in welchem auch ein Symbol 3 für die Anzeige der gegenwärtigen Bestrahlungsposition vorgesehen ist. Das Display 2 dient u.a. zur Abfrage und Kontrolle der Eingaben sowie zur Bekanntgabe der noch verbleibenden Restbestrahlungszeit in Stunden und Mitnuten, welche alle zehn Sekunden neu hochgerechnet und bei jeder Wertänderung neu ausgewiesen wird, bzw. zur Bekanntgabe der bereits konsumierten Bestrahlungsmenge in Prozentzahlen und zur Anzeige der im Augenblick eingenommenen Körperlage (s. Symbol 3). Am Display 2 erfolgt auch während des Meßvorganges die Anzeige der hochgerechneten Restverweildauer in Stunden und Minuten oder Prozentangabe der bereits konsumierten Bestrahlungsmenge (diese Angaben werden bei jeder Änderung der Rechenergebnisse aktualisiert).

Zum Ein- und Ausschalten des Gerätes 1 dient eine "ON/OFF"-Taste 4; zur Eingabe des Hauttypes (I-IV) entsprechend einer mitgelieferten Tabelle eine "ADJUST"-Taste 5; zur Eingabe eines Sonnenschutzfaktors des verwendeten Sonnenschutzmittels eine "FACTOR"-Taste 6; zur Eingabe der Bestrahlungsposition (Bauch- oder Rückenlage) eine "POSITION"-Taste 7; zur Bestätigung von Eingaben eine "ENTER"-Taste 8; zur Unterbrechung eines Rechenvorganges und zum Wiederbeginn desselben eine "STANDBY"-Taste 9; zur Änderung einer während der Betriebsphase ausgewiesenen Angabe der Prozent der bereits konsumierten Bestrahlungsmenge im Verhältnis zur errechneten Gesamttagesbestrahlungsmenge auf die Angabe der hochgerechneten Restverweildauer in Stunden und Minuten eine "%"-Taste 10; zur Eingabe von "+X%" eine "+"-Taste 12; und zur Eingabe von "-X%" eine "-"-Taste 13.

Eine numerische Tastatur 11 dient:
1. zur Eingabe des Hauttyps;
2. zur Eingabe der Anzahl der Bestrahlungstage, wobei hierdurch die für das Fortschreiten des Bräunungsvorganges notwendige, vom Gerät selbstständig errechnete Erhöhung der Tagesbestrahlungsmenge erfolgt (diese Erhöhung ist auf die Sonnengewöhnung der Haut zurückzuführen und wird mit 30% pro Tag angenommen);
3. zur Eingabe von ± X (Zahl) zwecks nachträglicher Korrektur der Berechnungsgrundlage, deren vorläufige Festlegung durch Eingabe des Hauttyps vorgenommen wurde;
4. zur Eingabe des Bestrahlungstages der laufenden Bestrahlungsperiode;
5. zur Eingabe des Sonnenschutzfaktors des verwendeten Sonnenschutzmittels; und
6. zur Eingabe der Bestrahlungsposition (definierte Bauch- oder Rückenlage, variable Lage bei Bewegung des Körpers).

Mit 14 ist eine Warneinrichtung in Form eines Schallgebers bezeichnet, der an einer Schmalseite des Gerätes 1 angeordnet ist. 15 bezeichnet allgemein die Meßzelle(n) mit den entsprechenden UV-Filtern zur Bestimmung der Intensität der UV-Strahlung im Bereich zwischen 290 und 400 nm (UV-A, UV-B), unter Berücksichtigung des Erythemmaximums bei 308 nm.

Durch Drücken der "ON/OFF"-Taste 4 wird das Gerät in den Betriebszustand versetzt. Die am Display 2 erscheinende Anzeige "DAY" fordert zur Eingabe des X-ten Tages der Sonnenbestrahlung innerhalb der laufenden Bestrahlungsperiode auf. Wird jedoch innerhalb von fünf Sekunden die "ADJUST"-Taste 5 gedrückt, so erscheint am Display 2 die Anzeige "TYPE" als Aufforderung zur Eingabe des Hauttyps (I-IV) auf. Der aus einer mitgelieferten Tabelle durch Berücksichtigung mehrerer persönlicher Faktoren, wie Hautfarbe, Haarfarbe, Augenfarbe, Sonnenempfindlichkeit, Vorbräunung bzw. Sonnengewöhnung, ermittelte Hauttyp kann nun durch Drücken der Tasten "1", "2", "3" oder "4" der numerischen Tastatur 11 eingegeben werden, worauf durch Drücken der ENTER-Taste 8 dieser Hauttyp-Wert abgespeichert wird und am Display 2 nochmals die Anzeige "ADJUST" erscheint. Es kann nun eine zusätzliche Korrektur bzw. Justierung des Hauttyp-Wertes vorgenommen werden (z.B. bei einem subjektiv empfunden zu geringen Bräunungserfolg nach Beendigung der letzten Bräunungsperiode oder bei sichtbarer Rötung im Anschluß an den vorhergegangenen Bestrahlungstag), wobei durch Drücken der "+"- oder "-"-Taste 12 oder 13 und Eingabe einer Zahl X (zwischen 1 und 50) über die Tastatur 11 eine Erhöhung oder Verminderung um X % erfolgt. Durch Eingabe von "0" (Null) bleibt der durch Eingabe des Hauttyps festgelegte Wert unverändert. Durch Drücken der "ENTER"-Taste 8 ist die Korrektur bzw. Justierung abgeschlossen, und am Display 2 erscheint wieder die Anzeige "DAY", die auch nach dem Einschalten des Geräts verbleiben würde, wenn die "ADJUST"-Taste 5 nicht innerhalb von fünf Sekunden nach dem Einschalten gedrückt wird.

Es erfolgt nun die Eingabe des X-ten Tages der Sonnenbestrahlung innerhalb der laufenden Bestrahlungsperiode durch Eingabe der entsprechenden Ziffer(n) über die Tastatur 11, welche darauf am Display 2 angezeigt wird bzw. werden. Durch Drücken der "ENTER"-Taste 8 wird dieser Wert abgespeichert.

Am Display 2 erscheint nun die Anzeige "FACTOR", die zur Eingabe des Sonnenschutzfaktors X aufruft, wobei hierfür als Eingabemöglichkeiten die Zahlen 0, 1, 2, 4, 6, 8 10, 12, 15 und 20 vorgesehen sind, die wiederum über die Tastatur 11 einzugeben sind und am Display 2 angezeigt werden. Durch Drücken der "ENTER"-Taste 8 wird auch dieser Wert abgespeichert.

Am Display 2 erscheint nunmehr die Anzeige "POSITION", die zur Eingabe der Position des Körpers während der Sonnenbestrahlung auffordert. Durch Eingabe einer der Zahlen 1, 2 oder 3 - welche in dieser Reihenfolge der "Rückenlage", der "Bauchlage" und der "Bewegung" des Körpers entsprechen - über die Tastatur 11 erscheint diese Zahl am Display 2, worauf dieser Wert durch Drücken der "ENTER"-Taste 8 abgespeichert wird und am Display 2 das entsprechende Symbol 3 für die eingegebene Körperposition sowie eine Prozentangabe der bereits konsumierten Strahlendosis in Bezug zur errechneten erforderlichen Tagesbestrahlungsmenge angezeigt wird. Diese Prozentangabe ist absolut, die Geschwindigkeit ihrer Annäherung auf 100 % hängt jedoch von der herrschenden Bestrahlungssituation ab und wird bei jeder Änderung des ausgewiesenen Wertes aktualisiert. Das Gerät 1 befindet sich nun im Meßzustand.

Während des Meßzustandes können folgende Anzeigen bzw. Korrekturen durchgeführt werden.

Durch Druck auf die "%"-Taste 10 erscheint am Display 2 neben dem Lagesymbol 3 die bei der augenblicklich herrschenden Bestrahlungssituation verbleibende, alle zehn Sekunden neu berechnete und bei jeder Wertänderung aktualisierte, hochgerechnete Restverweildauer. Diese Restbestrahlungszeit ist relativ und variiert in Abhängigkeit von nicht prognostizierbaren Bestrahlungsparametern wie Bewölkungsgrad und Sonnenstand. Ebenso kann ein Wechsel des Sonnenschutzmittels nicht vorhergesehen werden. Die Restbestrahlungszeit wird, sobald die Hochrechnung neue Ergebnisse liefert, aktualisiert und dient als Orientierungshilfe. Durch neuerliches Drücken der "%"-Taste 10 erscheint am Display wieder die vorherige Meßzustand-Anzeige.

Eine Korrektur der Körperposition bei einem Lagewechsel erfolgt durch Drücken der "POSITION"-Taste 7. Durch Eingabe der Zahl 1 oder 2 - entsprechend der Rückenlage oder Bauchlage - über die Tastatur 11 und Drücken der "ENTER"-Taste 8 werden die Bestrahlungsmengen für jede dieser beiden definierten Positionen getrennt berechnet. Durch Eingabe der Zahl 3 - entsprechend der variablen Position "Bewegung" - über die Tastatur 11 und Drücken der "ENTER"-Taste 8 werden die gemessenen Werte zu gleichen Teilen (zu jeweils 50 %) zu den definierten Positionen addiert. Auf dem Display 2 erscheint die neue Position im Symbol 3 und die Prozentangabe der bereits konsumierten Strahlendosis.

Bei einem Wechsel des Sonnenschutzmittels während eines Bestrahlungstages ist die Eingabe eines neuen Sonnenschutzfaktors erforderlich. Durch Drücken der "FACTOR"-Taste 6 erscheint die Anzeige "FACTOR" am Display 2 und es kann, wie oben beschrieben, ein neuer Sonnenschutzfaktor über die Tastatur 11 eingegeben werden. Durch Drücken der "ENTER"-Taste 8 wird der neue Wert abgespeichert. Am Display 2 erscheint dann die Anzeige "POSITION", worauf wie oben beschrieben die Eingabe einer neuen Position erfolgen kann.

Eine Anzeige der Restverweildauer (Stunden/Minuten) kann durch Drücken der "%"-Taste 10 erfolgen, worauf ein Wechsel der Anzeige am Display 2 von Lagesymbol 3 und Prozentangabe auf Lagesymbol 3 und Restverweildauer stattfindet. Durch erneutes Drücken auf die "%"-Taste 10 wird der Wechsel wieder rückgängig gemacht.

Wird das Sonnenbaden unterbrochen, so kann der Rechenvorgang durch Drücken der "STANDBY"-Taste 9 ebenfalls unterbrochen werden, worauf am Display 2 die Anzeige "STANDBY" aufscheint. Durch neuerliches Drücken der "STANDBY"-Taste 9 wird der Rechenvorgang wieder aufgenommen und am Display 2 wird wieder das Lagesymbol 3 und die Prozentangabe angezeigt.

Ist die durch sämtliche Eingaben bestimmte und durch Messung der Strahlungsintensität errechnete Tagesgesamtbestrahlungsmenge erreicht, so wird mittels eines Signaltons vom Schallgeber 14 und der Anzeige "END" am Display 2 das Ende der Bestrahlungszeit für die augenblicklich eingenommene Bestrahlungsposition angezeigt.

Durch Druck auf die "POSITION"-Taste 7 und Eingabe einer Zahl (1 oder 2) über die Tastatur 11 sowie anschließender Betätigung der "ENTER"-Taste 8 kann, nach vorgenommenem Lagewechsel in die andere definierte Position, die Restbestrahlung für die andere Bestrahlungsposition konsumiert werden. Nach dem Ende der Bestrahlungszeit für die andere Position ertönt erneut ein Signalton und die Anzeige "END" erscheint wieder am Display 2.

Jeder Versuch, das Gerät 1 durch Betätigung der "POSITION"-Taste 7 wieder in Betrieb zu setzen, wird mit der Abgabe des Signaltones und der Anzeige "END" am Display 2 beantwortet.

Erst nach dem Abschalten des Gerätes 1 durch Betätigung der "ON/OFF"-Taste 4 kann der Vorgang der Inbetriebnahme wiederholt werden.

Als Grundlage für die Berechnung der Tagesgesamtbestrahlungsmenge werden der Wellenlänge-Meßbereich, der Hauttyp, der Bestrahlungstag und der Sonnenschutzfaktor herangezogen:

### 1. Wellenlänge-Meßbereich

Die Messung der elektromagnetischen Strahlung erfolgt im Wellenlängenbereich zwischen 290 nm und 400 nm. Durch Ausfilterung der übrigen Wellenlängen soll eine Messung in Nähe der bzw. um die Wellenlänge 308 nm (Erythemmaximum) erreicht werden.

Ziel der Messung der UV-Strahlenbelastung der Haut ist, eine Strahlendosis von maximal 66 % der Erythemschwelle zuzulassen und dem Sonnenbadenden vor Überschreitung dieses Grenzwertes optisch und v.a. akustisch zu warnen.

### 2. Hauttyp

Die Eingabe des Hauttyps über die numerische Tastatur 11 durch Eingabe einer Zahl zwischen 1 und 4 bewirkt eine Erhöhung der Basisverweildauer 1 um den Faktor 2 bzw. 3,3 bzw. 5.

### 3. Bestrahlungstag

Die Erhöhung der Eigenschutzzeit der Haut wird pro Bestrahlungstag innerhalb einer Bestrahlungsperiode mit 30 % angenommen.

### 4. Sonnenschutzfaktor

Die Berechnungsgrundlage wird um jenen Faktor, der als Sonnenschutzfaktor des Sonnenschutzmittels ausgewiesen wird, erhöht.

Diese der Berechnung zugrundliegende Daten sind mittels dermatologischer Befunde zu verifizieren und ebenso wie die Länge der Basisverweildauer auszutesten.

## Patentansprüche

1. Gerät zur Erfassung von Strahlenbelastungen im Bereich der ultravioletten Strahlung, mit zumindest einer UV-empfindlichen Meßzelle (15a, 15b, 15c), deren Ausgangssignal einem mit einem Speicher versehenen Single-Chip-Rechner (19) zur Auswertung zugeführt wird, welcher Single-Chip-Rechner (19) ein festes, eingebranntes Ablaufprogramm enthält und mit einer Eingabeeinrichtung (11) sowie einer Anzeige- und einer Warneinrichtung (2; 14) verbunden ist, dadurch gekennzeichnet,
- daß die Eingabeeinrichtung (11) Eingabeelemente (7) zur Eingabe einer von drei Positionsvarianten, nämlich "Bauchlage", "Rückenlage" und "Bewegung", aufweist, und
- daß der Single-Chip-Rechner (19) eingerichtet ist, die den Positionsvarianten "Bauchlage" bzw. "Rückenlage" zugeordneten Strahlungsmengen getrennt zu erfassen und aufzusummieren bzw. zu speichern,
- wobei der Single-Chip-Rechner (19) durch Betätigen der Eingabeelemente (7) zur getrennten Erfassung und Aufsummierung bzw. Speicherung der den Positionsvarianten "Bauchlage" bzw. "Rückenlage" zugeordneten Strahlungsmengen veranlaßbar ist; und/oder
- eine beidseitige Anbringung von Meßzellen (15a, 15b, 15c) und Bedienungselementen am Gerät vorgesehen ist und der Single-Chip-Rechner (19) eingerichtet ist, bei einem Positionswechsel die Strahlungsmenge für die neue Position, Bauch-bzw. Rückenlage, durch Wenden des Gerätes vom Rechner (19) gesondert zu erfassen; und/oder
- externe Meßzellen vorgesehen sind, bei deren Anbringung am Körper die jeweilige Strahlungsmenge direkt zufolge der eingenommenen Position vom Rechner (19) gesondert erfaßbar ist.

2. Gerät nach Anspruch 1, dadurch gekennzeichnet, daß der Single-Chip-Rechner (19) eingerichtet ist, die der eingegebenen Positionsvariante "Bewegung" zugeordnete Strahlungsmenge gesondert zu erfassen und je zur Hälfte zu den den Positionsvarianten "Bauchlage" bzw. "Rückenlage" zugeordneten Strahlungsmengen hinzuzurechnen.

3. Gerät nach Anspruch 1 oder 2, dadurch gekennzeichnet, daß der Single-Chip-Rechner (19) eingerichtet ist, für jede der beiden Positionsvarianten "Bauchlage" bzw. "Rückenlage" bei Erreichen der vorgegebenen zulässigen Tagesbestrahlungsmenge die Warneinrichtung (14) zu aktivieren.

4. Gerät nach einem der Ansprüche 1 bis 3, dadurch gekennzeichnet, daß der Single-Chip-Rechner (19) eingerichtet ist, bei Eingabe von mehreren aufeinanderfolgenden Bestrahlungstagen die zulässige Tagesbestrahlungsmenge um einen vorgegebenen Prozentsatz, insbesondere um 30%, pro Bestrahlungstag zu erhöhen.

5. Gerät nach einem der Ansprüche 1 bis 4, dadurch gekennzeichnet, daß die Anzeigeeinrichtung (2) mit den Positionsvarianten zugeordneten Symbolanzeigen versehen ist.

6. Gerät nach einem der Ansprüche 1 bis 5, dadurch gekennzeichnet, daß mehrere Meßzellen (15a, 15b, 15c) vorgesehen sind, die für UV-A-, UV-B-, und UV-C-Strahlung gesondert empfindlich sind, und daß im Falle der Erfassung von UV-C-Strahlung unmittelbar die Warneinrichtung (14) zur Abgabe eines Alarmsignals aktivierbar ist.

7. Gerät nach einem der Ansprüche 1 bis 6, gekennzeichnet durch ein Eingabeelement (5) für die Eingabe eines Hauttyp-Parameters, um die vom Rechner (19) ermittelte zulässige Bestrahlungsdauer je nach Hauttyp, insbesondere entsprechend einem Faktor 2; 3,3; bzw. 5, zu erhöhen.

8. Gerät nach Anspruch 7, dadurch gekennzeichnet, daß die Eingabeeinrichtung (11) zur Eingabe eines Korrekturfaktors betreffend die Haupttyp-Parametereingabe eingerichtet ist.

9. Gerät nach einem der Ansprüche 1 bis 8, gekennzeichnet durch ein Eingabeelement (6) für den Sonnenschutzfaktor eines bei der Bestrahlung verwendeten Sonnenschutzmittels, um die zulässige UV-A- bzw. UV-B-Strahlungsmenge entsprechend zu korrigieren.

10. Gerät nach Anspruch 9, dadurch gekennzeichnet, daß das Sonnenschutzfaktor-Eingabeelement (6) eingerichtet ist, um während eines Bestrahlungstages die Sonnenschutzfaktor-Eingabe bei einem Wechsel des Sonnenschutzmittels zu aktualisieren.

11. Gerät nach einem der Ansprüche 1 bis 10, dadurch gekennzeichnet, daß die Anzeigeeinrichtung (2) zur wahlweisen Anzeige einer erwarteten zulässigen Rest-Bestrahlungsdauer bzw. einer Prozentangabe der bereits konsumierten Bestrahlungsmenge vorgesehen ist.

## Claims

1. A device for sensing the radiation load in the range of ultraviolett radiation, comprising at least one UV-sensitive measuring cell (15a, 15b, 15c) the output signal of which is supplied, for evaluation thereof, to a single chip computer (19) provided with a memory, the single chip computer (19) containing a solid, burnt-in sequence program and being connected with an input device (11) as well as with a display and a warning device (2; 14), characterised in that
- the input device (11) comprises input elements (7) for inputting one of three position variants, i.e. "prone position", "supine position" and "movement", and
- the single chip computer (19) is adapted to separately sense and add up and store the radiation doses associated with the position variants "prone position" and "supine position", respectively,
- wherein the single chip computer (19) is actuatable to separately sense and add up and store the radiation doses associated with the position variants "prone position" and "supine position" by actuation of the input elements (7); and/or
- measuring cells (15a, 15b, 15c) and operating elements are provided on both sides of the device and the single chip computer (19) is adapted to separately sense the radiation dose for the new position, prone or supine, respectively, in case the position is changed, by turning the device; and/or
- external measuring cells are provided, by means of which, when attached to the body, the respective radiation dose can be separately sensed by the computer (19) on account of the position asumed.

2. A device according to claim 1, characterised in that the single chip computer (19) is adapted to separately sense the radiation amount associated with the position variant "movement" and to add one half thereof to each of the radiation doses associated to the positioning variants "prone" and "supine".

3. A device according to claim 1 or 2, characterised in that the single chip computer (19) is adapted to actuate the warning device for each of the two positioning variants "prone" or "supine" when the pre-determined allowable daily radiation dose has been reached.

4. A device according to any one of claims 1 to 3, characterised in that the single chip computer (19) is adapted to increase the allowable daily radiation dose by a pre-determined percentage, in particular by 30%, per day of irradiation when several successive days of irradiation are input.

5. A device according to any one of claims 1 to 4, characterised in that the display (2) has symbol indications associated to the position variants.

6. A device according to any one of claims 1 to 5, characterised in that several measuring cells (15a, 15b, 15c) are provided which are separately sensitive to UV-A, UV-B and UV-C radiation, and that the warning device (14) is immediately actuatable to emit an alarm signal if UV-C radiation is sensed.

7. A device according to any one of claims 1 to 6, characterised by an input element (5) for inputting a skin type parameter so as to increase the allowable period of irradiation determined by the computer (19) in dependence on the skin type, in particular corresponding to a factor 2; 3,3; or 5, respectively.

8. A device according to claim 7, characterised in that the input device (11) is adapted for inputting a correction factor concerning the skin type parameter input.

9. A device according to any one of claims 1 to 8, characterised by an input element (6) for the sun protection factor of a sun screen used during irradiation so as to correct accordingly the allowable UV-A or UV-B radiation dose.

10. A device according to claim 9, characterised in that the sun protection factor input element (6) is adapted to actualize the sun protection factor input in the course of a day of irradiation, if the sun screen has been changed.

11. A device according to any one of claims 1 to 10, characterised in that the display (2) is provided for selectively displaying an expected allowable remaining irradiation period or a statement of the percentage of the radiation dose already consumed.

## Revendications

1. Appareil pour détecter les expositions à l'irradiation dans le domaine du rayonnement ultraviolet, avec au moins un capteur sensible aux UV (15a, 15b, 15c) dont le signal de sortie est amené à un micro-ordinateur monoprocesseur (19), équipé d'une mémoire, pour l'interprétation, ce micro-ordinateur monoprocesseur (19) contenant un programme opérationnel gravé fixe et étant relié à un dispositif d'entrée (11) ainsi qu'à un dispositif d'affichage et un dispositif d'alarme (2; 14), caractérisé en ce que
- le dispositif d'entrée (11) présente des éléments d'entrée (7) pour entrer l'une de trois variantes de position, notamment "position sur le ventre", "position sur le dos" et "mouvement", et
- le micro-ordinateur monoprocesseur (19) est disposé pour détecter séparément et totaliser les doses de rayonnement affectées aux variantes de position "position sur le ventre" ou "position sur le dos" ou pour les mémoriser,
- le micro-ordinateur monoprocesseur (19) pouvant être amené par l'activation des éléments d'entrée (7) à une détection, totalisation ou mémorisation séparée des doses de rayonnement affectées aux variantes de position "position sur le ventre" ou "position sur le dos"; et/ou
- une application bilatérale de capteurs (15a, 15b, 15c) et d'éléments de commande est prévue sur l'appareil et le micro-ordinateur monoprocesseur (19) est disposé, en cas de changement de position, pour détecter séparément la dose de rayonnement pour la nouvelle position, position sur le ventre ou position sur le dos, en amenant le micro-ordinateur (19) à retourner l'appareil; et/ou
- des capteurs externes sont prévus, à l'application desquels sur le corps, la dose de rayonnement respective peut être détectée séparément immédiatement suite à la position adoptée par le micro-ordinateur (19).

2. Appareil selon la revendication 1, caractérisé en ce que le micro-ordinateur monoprocesseur (19) est disposé pour détecter séparément la dose de rayonnement affectée à la variante de position "mouvement" et pour l'ajouter respectivement à moitié aux doses de rayonnement affectées aux variantes de position "position sur le ventre" ou "position sur le dos".

3. Appareil selon la revendication 1 ou 2, caractérisé en ce que le micro-ordinateur monoprocesseur (19) est disposé pour activer le dispositif d'alarme (14) pour chacune des deux variantes de position "position sur le ventre" ou "position sur le dos" quand la dose d'irradiation admissible par jour prédéterminée est atteinte.

4. Appareil selon l'une quelconque des revendications 1 à 3, caractérisé en ce que le micro-ordinateur monoprocesseur (19) est disposé pour augmenter la dose d'irradiation admissible par jour d'un pourcentage prédéterminé, en particulier de 30%, par journée d'irradiation, quand plusieurs journées d'irradiation consécutives sont entrées.

5. Appareil selon l'une quelconque des revendications 1 à 4, caractérisé en ce que le dispositif d'affichage (2) est équipé des affichages de symboles affectés aux variantes de position.

6. Appareil selon l'une quelconque des revendications 1 à 5, caractérisé en ce que plusieurs capteurs (15a, 15b, 15c) sont prévus, qui sont particulièrement sensibles au rayonnement UV-A, UV-B et UV-C, et en ce que, dans le cas où un rayonnement UV-C serait détecté, le dispositif d'alarme (14) peut être activé immédiatement pour sortir un signal d'alarme.

7. Appareil selon l'une quelconque des revendications 1 à 6, caractérisé par un élément d'entrée (5) pour entrer un paramètre de type de peau afin d'augmenter, selon le type de peau, la durée d'irradiation admissible calculée par le micro-ordinateur (19), en particulier selon un facteur de 2; 3,3; ou 5.

8. Appareil selon la revendication 7, caractérisé en ce que le dispositif d'entrée (11) est disposé pour entrer un facteur de compensation concernant l'entrée de paramètre du type de peau.

9. Appareil selon l'une quelconque des revendications 1 à 8, caractérisé par un élément d'entrée (6) pour le facteur d'écran solaire d'un produit d'écran solaire utilisé lors de l'irradiation afin de compenser en conséquence la dose de rayonnement UV-A ou UV-B admissible.

10. Appareil selon la revendication 9, caractérisé en ce que l'élément d'entrée du facteur d'écran solaire (6) est disposé pour mettre à jour, pendant une journée d'irradiation, l'entrée du facteur d'écran solaire en cas de changement du produit d'écran solaire.

11. Appareil selon l'une quelconque des revendications 1 à 10, caractérisé en ce que le dispositif d'affichage (2) est prévu pour l'affichage sélectif d'une durée d'irradiation résiduelle admissible attendue ou d'un pourcentage de la dose d'irradiation déjà consommée.
